# DEMANDE DE BREVET EUROPEEN

(11) **EP 4 703 204 A1**
(43) Date de publication de la demande: **04.03.2026**
(21) Numéro de dépôt: 25198003.3
(22) Date de dépôt: 26.08.2025
(51) Int. Cl.: B60Q 1/04, B60Q 1/26

(54) **DISPOSITIF D ÉCLAIRAGE DE CALANDRE DE PARE-CHOCS**

(30) Priorité: 26.08.2024 FR 2409112
(71) Demandeur: Flex-N-Gate France, 25405 Audincourt (FR)
(72) Inventeur: LAURENÇOT, David, 25550 RAYNANS (FR); GARNIER, Yohan, 25600 NOMMAY (FR)
(74) Mandataire: Lavoix

(57) **Abrégé**

L'invention concerne un dispositif d'éclairage (20) de calandre (16) de pare-chocs, s'étendant entre une extrémité supérieure (22) et une extrémité inférieure (24) et comprenant un boîtier arrière (26) et une paroi avant (28) définissant un espace interne (40) ;
le dispositif d'éclairage comprenant en outre un circuit imprimé (30), une source lumineuse (32) et une plaque de diffusion (34), reçus dans l'espace interne ; le circuit imprimé (30) et la source lumineuse (32) étant disposés à l'extrémité supérieure (22) du dispositif d'éclairage ;
le dispositif d'éclairage étant configuré de sorte que : une première distance (42) sépare le boîtier arrière et la paroi avant à l'extrémité supérieure (22) ; et une deuxième distance (44) sépare le boîtier arrière et la paroi avant à l'extrémité inférieure (24) ; la deuxième distance étant inférieure à la première distance.

## Description

La présente invention concerne un dispositif d'éclairage de calandre de pare-chocs, s'étendant entre une extrémité supérieure et une extrémité inférieure et comprenant : un boîtier arrière ; et une paroi avant, assemblée au boîtier arrière, ledit boîtier arrière et ladite paroi avant définissant un espace interne ; la paroi avant étant transparente ou translucide ; le dispositif d'éclairage comprenant en outre : un circuit imprimé ; une source lumineuse, fixée au circuit imprimé ; et une plaque de diffusion, un bord supérieur de ladite plaque de diffusion étant disposé en vis-à-vis de la source lumineuse ; le circuit imprimé, la source lumineuse et la plaque de diffusion étant reçus dans l'espace interne ; le circuit imprimé et la source lumineuse étant disposés à l'extrémité supérieure du dispositif d'éclairage ; la plaque de diffusion étant disposée sensiblement en vis-à-vis de la paroi avant et s'étendant sensiblement entre l'extrémité supérieure et l'extrémité inférieure du dispositif d'éclairage.

Il est connu de réaliser les calandres de pare-chocs de véhicules automobiles avec un dispositif d'éclairage intégré. Un tel dispositif d'éclairage joue un rôle esthétique et permet d'identifier la marque de véhicule de jour comme de nuit.

Cependant, en cas de choc frontal subi par le pare-chocs avant du véhicule automobile, des dommages peuvent être infligés au dispositif d'éclairage par la structure même du véhicule.

Afin de limiter ces dommages, il est connu d'équiper le pare-chocs d'un dispositif d'absorption des chocs, comme décrit dans la demande FR2403388, non encore publiée, au nom de la Demanderesse.

La présente invention a pour but de proposer un dispositif d'éclairage configuré pour minimiser les dommages subis en cas de choc frontal.

A cet effet, l'invention a pour objet un dispositif d'éclairage du type précité, configuré de sorte que : une première distance sépare le boîtier arrière et la paroi avant à l'extrémité supérieure ; et une deuxième distance sépare le boîtier arrière et la paroi avant à l'extrémité inférieure ; la deuxième distance étant inférieure à la première distance.

Suivant d'autres aspects avantageux de l'invention, le dispositif d'éclairage comporte l'une ou plusieurs des caractéristiques suivantes, prises isolément ou suivant toutes les combinaisons techniquement possibles :
- le boîtier arrière comporte au moins un épaulement destiné à être disposé sensiblement horizontalement, de sorte que le boîtier arrière soit plus proche de la paroi avant au-dessous dudit épaulement qu'au-dessus dudit épaulement ;
- le boîtier arrière comporte au moins une portion inclinée destinée à être disposée inclinée par rapport à la verticale, de sorte que le boîtier arrière soit plus proche de la paroi avant au-dessous de ladite portion inclinée qu'au-dessus de ladite portion inclinée ;
- une troisième distance sépare le boîtier arrière et la plaque de diffusion à l'extrémité supérieure ; et une quatrième distance sépare le boîtier arrière et la plaque de diffusion à l'extrémité inférieure ; la quatrième distance étant inférieure à la troisième distance ;
- une face arrière de la plaque de diffusion comporte une ou plusieurs rainures ;
- le dispositif d'éclairage comprend en outre une plaque de réflexion, la plaque de diffusion étant disposée entre la paroi avant et la plaque de réflexion ;
- le dispositif d'éclairage comprend en outre une bande de masquage située à l'extrémité supérieure, ladite bande de masquage étant disposée entre la paroi avant et le circuit imprimé.

L'invention se rapporte en outre à un véhicule automobile comprenant : une calandre de pare-chocs ; et une poutre transversale avant, située en arrière de ladite calandre ; la calandre comprenant un dispositif d'éclairage tel que décrit ci-dessus, l'extrémité supérieure dudit dispositif d'éclairage étant disposée plus haut que la poutre transversale avant.

Suivant un aspect avantageux de l'invention, l'extrémité inférieure du dispositif d'éclairage est disposée sensiblement au même niveau que la poutre transversale avant selon la verticale.

L'invention apparaîtra plus clairement à la lecture de la description qui va suivre, donnée uniquement à titre d'exemple non limitatif, et faite en référence aux dessins dans lesquels :
- la figure 1 est une vue schématique partielle, en coupe, d'un véhicule selon un mode de réalisation de l'invention, dans une première configuration ;
- la figure 2 est une vue de détail du véhicule de la figure 1 ; et
- la figure 3 est une vue schématique partielle, en coupe, d'un véhicule schématique partielle, en coupe, du véhicule des figures 1 et 2, dans une deuxième configuration.

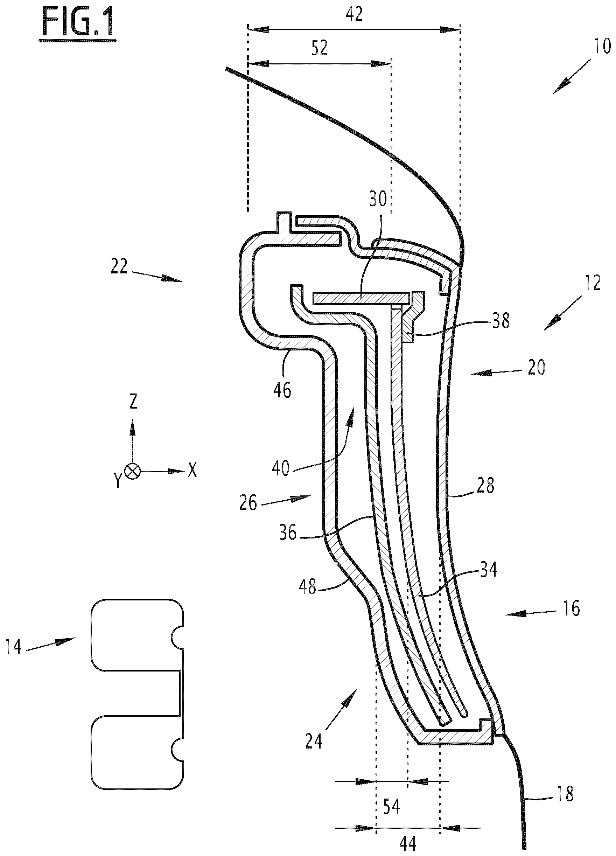

Les figures 1 à 3 représentent un véhicule 10 automobile, selon un mode de réalisation de l'invention. Seul l'avant du véhicule 10 est visible. Le terme « avant » s'entend par rapport à une direction de déplacement horizontale du véhicule 10.

On considère une base orthonormée (X, Y, Z) associée au véhicule 10. La direction X est la direction de déplacement du véhicule, la direction Z représente la verticale.

Le véhicule 10 automobile comprend un pare-chocs 12 avant. Le pare-chocs 12 comprend une poutre transversale avant 14 et une calandre 16.

La poutre transversale avant 14 s'étend selon la direction Y. La calandre 16 est disposée en avant de la poutre transversale avant 14 et forme une extrémité avant du véhicule 10.

La calandre 16 comprend une peau 18 et un dispositif d'éclairage 20, solidaires l'un de l'autre. Plus précisément, la peau 18 et le dispositif d'éclairage 20 forment une surface externe sensiblement continue, visible de l'extérieur du véhicule.

Le dispositif d'éclairage 20 s'étend entre une extrémité supérieure 22 et une extrémité inférieure 24 selon la direction Z. L'extrémité supérieure 22 est située plus haut selon Z que la poutre transversale avant 14. De préférence, comme dans le mode de réalisation représenté, ladite poutre transversale avant 14 est sensiblement au niveau de ladite extrémité inférieure 24 selon la direction Z.

Le dispositif d'éclairage 20 comprend : un boîtier arrière 26 ; une paroi avant 28 ; un circuit imprimé 30 ; une source lumineuse 32 ; une plaque de diffusion 34 ; une plaque de réflexion 36 ; et une bande de masquage 38.

Le boîtier arrière 26 et la paroi avant 28 sont assemblés l'un à l'autre, de sorte à définir un espace interne 40. La paroi avant 28 est transparente ou translucide et orientée vers l'extérieur du véhicule 10.

Une dimension selon X du dispositif d'éclairage 20 est plus élevée à l'extrémité supérieure 22 qu'à l'extrémité inférieure 24.

Plus précisément, une première distance 42 sépare le boîtier arrière 26 et la paroi avant 28 à l'extrémité supérieure 22 ; et une deuxième distance 44 sépare le boîtier arrière et la paroi avant à l'extrémité inférieure 24 ; la deuxième distance 44 étant inférieure à la première distance 42.

De préférence, la paroi avant 28 est disposée sensiblement verticalement et présente une épaisseur sensiblement constante entre l'extrémité supérieure 22 et l'extrémité inférieure 24 du dispositif d'éclairage 20.

De préférence, le boîtier arrière 26 comporte un ou plusieurs épaulements 46 et/ou une ou plusieurs portions inclinées 48 par rapport à la verticale, de sorte que la distance entre le boîtier arrière 26 et la paroi avant 28 diminue progressivement entre l'extrémité supérieure 22 et l'extrémité inférieure 24.

Dans le mode de réalisation représenté, le boîtier arrière 26 comporte un épaulement 46 sensiblement horizontal, disposé proche de l'extrémité supérieure 22. Le boîtier arrière 26 est plus proche de la paroi avant 28 au-dessous dudit épaulement 46 qu'au-dessus dudit épaulement.

En outre, dans le mode de réalisation représenté, le boîtier arrière 26 comporte une portion inclinée 48, disposée proche de l'extrémité inférieure 24. Le boîtier arrière 26 est plus proche de la paroi avant 28 au-dessous de ladite portion inclinée 48 qu'au-dessus de ladite portion inclinée.

Dans le mode de réalisation représenté, la poutre transversale avant 14 est située plus bas selon Z que la portion inclinée 48.

Le circuit imprimé 30, la source lumineuse 32 et la plaque de diffusion 34 sont reçus dans l'espace interne 40.

Le circuit imprimé 30 est sensiblement disposé dans un plan horizontal et présente une forme sensiblement rectangulaire. De préférence, une longueur du circuit imprimé 30 s'étend selon Y et une largeur dudit circuit imprimé s'étend selon X.

La source lumineuse 32 est solidaire d'une face inférieure du circuit imprimé 30. De préférence, la source lumineuse 32 est formée d'une pluralité de diodes électroluminescentes (LED) alignées le long du circuit imprimé 30, sensiblement selon Y.

Le circuit imprimé 30 et la source lumineuse 32 sont disposés proches de l'extrémité supérieure 22 du dispositif d'éclairage 20. De préférence, le circuit imprimé 30 et la source lumineuse 32 sont disposés au-dessus de l'épaulement 46 du boîtier arrière 26. En particulier, la première distance 42 entre le boîtier arrière 26 et la paroi avant 28 est adaptée à l'accueil du circuit imprimé 30 dans l'espace interne 40, au niveau de l'extrémité supérieure 22.

La plaque de diffusion 34 est disposée sensiblement en vis-à-vis de la paroi avant 28 et s'étend sensiblement entre l'extrémité supérieure 22 et l'extrémité inférieure 24 du dispositif d'éclairage 20. De préférence, la plaque de diffusion 34 est disposée sensiblement verticalement.

La plaque de diffusion 34 s'étend à partir d'un bord supérieur 50, disposé sensiblement horizontalement. Le bord supérieur 50 est situé en vis-à-vis de la source lumineuse 32. De préférence, le bord supérieur 50 est allongé selon Y et est en vis-à-vis de la pluralité de LED alignées le long du circuit imprimé 30.

De préférence, une troisième distance 52 sépare le boîtier arrière 26 et la plaque de diffusion 34 à l'extrémité supérieure 22 ; et une quatrième distance 54 sépare le boîtier arrière et la plaque de diffusion à l'extrémité inférieure 24, la quatrième distance 54 étant inférieure à la troisième distance 52.

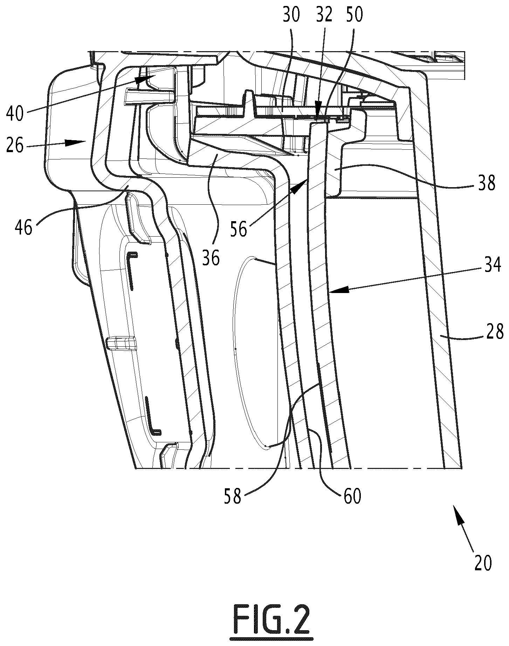

Selon un mode de réalisation, une face arrière 56 de la plaque de diffusion 34 comporte une ou plusieurs rainures 58, comme visible sur la figure 2. Dans le mode de réalisation représenté, les rainures 58 sont sensiblement verticales et réparties le long de la direction Y.

De préférence, les rainures 58 présentent une forme permettant une diffraction lumineuse, comme décrit ci-après. Par exemple, les rainures 58 sont formées de micro-cônes.

La plaque de réflexion 36 est reçue dans l'espace interne 40. La plaque de diffusion 34 est disposée entre la paroi avant 28 et la plaque de réflexion 36 selon la direction X.

La plaque de réflexion 36 comporte une surface réfléchissante 60, orientée vers la plaque de diffusion 34.

De préférence, au niveau des rainures 58, une distance entre la surface réfléchissante 60 et la face arrière 56 de la plaque de diffusion 34 est sensiblement constante selon la direction Z.

La bande de masquage 38 est reçue dans l'espace interne 40 et située à l'extrémité supérieure 22 du dispositif d'éclairage 20.

La bande de masquage 38 s'étend sensiblement verticalement et présente de préférence une forme allongée selon Y. Ladite bande de masquage 38 est disposée entre la paroi avant 28 et le circuit imprimé 30 selon la direction X.

De préférence, la bande de masquage 38 est également disposée entre la paroi avant 28 et le bord supérieur 50 de la plaque de diffusion 34, selon la direction X. De préférence, la bande de masquage 38 est située plus haut que les rainures 58 de la plaque de diffusion 34.

Ainsi, pour un observateur situé à l'extérieur du véhicule 10, le circuit imprimé 30 et le bord supérieur 50 de la plaque de diffusion 34 sont dissimulés par la bande de masquage 38. En revanche, les rainures 58 ne sont pas dissimulés par ladite bande de masquage.

Un procédé de fonctionnement du dispositif d'éclairage 20 va maintenant être décrit. Lorsque la source lumineuse 32 est en fonctionnement, la lumière émise est diffusée dans la plaque de diffusion 34 depuis le bord supérieur 50. Ladite lumière est diffractée au niveau des rainures 58 et visible depuis l'extérieur du véhicule 10, à travers la paroi avant 28. Ladite lumière est en outre réfléchie sur la surface réfléchissante 60 de la plaque de réflexion 36, conférant un effet de profondeur au motif lumineux.

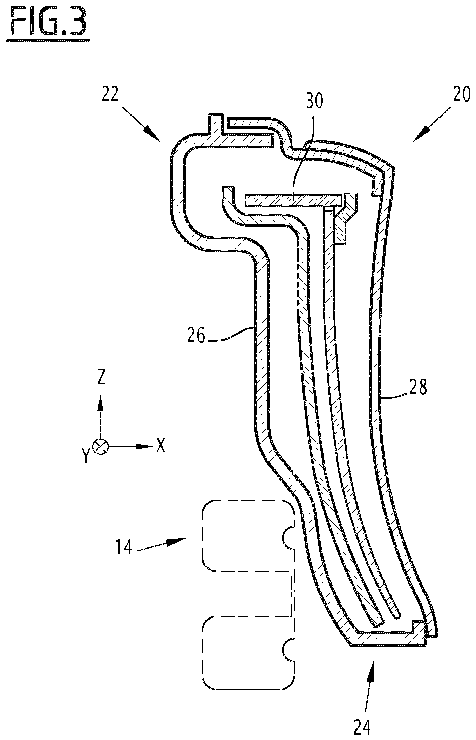

La figure 1 montre le véhicule 10 dans une première configuration, ou configuration initiale. En cas de choc frontal au niveau du pare-chocs 12 avant du véhicule 10, la calandre 16 est déformée et se rapproche de la poutre transversale avant 14 selon la direction X. La figure 3 montre le véhicule 10 dans une deuxième configuration, ou configuration après choc frontal.

Dans la deuxième configuration, la poutre transversale avant 14 est située proche de l'extrémité inférieure 24 du dispositif d'éclairage 20, préférentiellement plus bas que la portion inclinée 48. Cependant, le circuit imprimé 30 et la source lumineuse 32 sont situés au-dessus de ladite poutre transversale avant 14 et ne sont donc pas endommagés par ladite poutre lors du choc.

Par ailleurs, l'extrémité inférieure 24 du dispositif d'éclairage 20 présente une faible épaisseur, correspondant à la deuxième distance 44. Il est donc possible que le recul de la calandre 16 lors du choc soit suffisamment faible pour que le dispositif d'éclairage 20 n'entre pas en contact avec la poutre transversale avant 14.

La configuration du dispositif d'éclairage 20 selon l'invention minimise donc les dégradations dudit dispositif d'éclairage en cas de choc frontal subi par le véhicule 10.

## Revendications

1. Dispositif (20) d'éclairage de calandre (16) de pare-chocs, s'étendant entre une extrémité supérieure (22) et une extrémité inférieure (24) et comprenant : un boîtier arrière (26) ; et une paroi avant (28), assemblée au boîtier arrière, ledit boîtier arrière et ladite paroi avant définissant un espace interne (40) ; la paroi avant étant transparente ou translucide ;
le dispositif d'éclairage comprenant en outre : un circuit imprimé (30) ; une source lumineuse (32), fixée au circuit imprimé ; et une plaque de diffusion (34), un bord supérieur (50) de ladite plaque de diffusion étant disposé en vis-à-vis de la source lumineuse ;
le circuit imprimé, la source lumineuse et la plaque de diffusion étant reçus dans l'espace interne (40) ; le circuit imprimé (30) et la source lumineuse (32) étant disposés à l'extrémité supérieure (22) du dispositif d'éclairage ; la plaque de diffusion (34) étant disposée sensiblement en vis-à-vis de la paroi avant (28) et s'étendant sensiblement entre l'extrémité supérieure et l'extrémité inférieure (24) du dispositif d'éclairage ;
le dispositif d'éclairage étant configuré de sorte que : une première distance (42) sépare le boîtier arrière et la paroi avant à l'extrémité supérieure (22) ; et une deuxième distance (44) sépare le boîtier arrière et la paroi avant à l'extrémité inférieure (24) ; la deuxième distance étant inférieure à la première distance.

2. Dispositif d'éclairage selon la revendication 1, dans lequel le boîtier arrière (26) comporte au moins un épaulement (46) destiné à être disposé sensiblement horizontalement, de sorte que le boîtier arrière soit plus proche de la paroi avant (28) au-dessous dudit épaulement (46) qu'au-dessus dudit épaulement.

3. Dispositif d'éclairage selon la revendication 1 ou 2, dans lequel le boîtier arrière (26) comporte au moins une portion inclinée (48) destinée à être disposée inclinée par rapport à la verticale, de sorte que le boîtier arrière soit plus proche de la paroi avant (28) au-dessous de ladite portion inclinée (48) qu'au-dessus de ladite portion inclinée.

4. Dispositif d'éclairage selon l'une des revendications précédentes, dans lequel : une troisième distance (52) sépare le boîtier arrière (26) et la plaque de diffusion (34) à l'extrémité supérieure ; et une quatrième distance (54) sépare le boîtier arrière et la plaque de diffusion à l'extrémité inférieure ; la quatrième distance étant inférieure à la troisième distance.

5. Dispositif d'éclairage selon l'une des revendications précédentes, dans lequel une face arrière (56) de la plaque de diffusion (34) comporte une ou plusieurs rainures (58).

6. Dispositif d'éclairage selon l'une des revendications précédentes, comprenant en outre une plaque de réflexion (36), la plaque de diffusion (34) étant disposée entre la paroi avant (28) et la plaque de réflexion.

7. Dispositif d'éclairage selon l'une des revendications précédentes, comprenant en outre une bande de masquage (38) située à l'extrémité supérieure (22), ladite bande de masquage étant disposée entre la paroi avant et le circuit imprimé (30).

8. Véhicule (10) automobile comprenant : une calandre (16) de pare-chocs ; et une poutre transversale avant (14), située en arrière de ladite calandre ; la calandre comprenant un dispositif d'éclairage (20) selon l'une des revendications précédentes, l'extrémité supérieure (22) dudit dispositif d'éclairage étant disposée plus haut que la poutre transversale avant (14).

9. Véhicule selon la revendication 8, dans lequel l'extrémité inférieure (24) du dispositif d'éclairage (20) est disposée sensiblement au même niveau que la poutre transversale avant (14) selon la verticale.
